# EUROPEAN PATENT APPLICATION

(11) **EP 4 636 354 A1**
(43) Date of publication of application: **22.10.2025**
(21) Application number: 25161417.8
(22) Date of filing: 03.03.2025
(51) Int. Cl.: G01B 21/20, B64F 5/60, G05B 19/418, F01D 5/14

(54) **RAPID PART ASSESSMENT WITH K-FOLD EVALUATION**

(30) Priority: 04.03.2024 US 202418594827
(71) Applicant: PRATT & WHITNEY CANADA CORP., Longueuil, Québec J4G 1A1 (CA)
(72) Inventor: SOUKHOSTAVETS, Egor, Longueuil, J4J 1V4 (CA); RUOTI, Christopher A., Eagle Mountain, 84005 (US); FUDGE, Daniel, Vaughan, L6A 0S4 (CA); BREWER, Steven, Charlottesville, 22902 (US); AMOR, Nesrine Ben, Toronto, M5V 3W6 (CA)
(74) Representative: Dehns

(57) **Abstract**

A method of assessing the quality of a manufactured component includes the steps of manufacturing a component (22) and generating data (24) at each of a plurality of locations on the component (22). The generated data is passed to a machine learning branch (35) wherein the generated data is compared to training data at each of the plurality of locations and across a plurality of folds using K-fold validation to determine whether the component (22) is of a functionally tolerant dimension at each of the plurality of sections. A system (20) is also disclosed.

## Description

### BACKGROUND

This application relates to a testing method and system for assessing the quality of a manufactured part.

Gas turbine engines are known, and typically include a propulsor delivering air into a compressor section. The compressed air is delivered into a combustor where it is mixed with fuel and ignited. Products of this combustion pass downstream over turbine rotors, driving them to rotate.

As known, the propulsor, the compressor, and the turbine all have a rotating disk carrying a plurality of vanes formed with an airfoil shape. As an example, one type of rotor and blades is a so called integrally bladed rotor ("IBR").

It is typical that some physical testing of a manufactured gas turbine engine component is performed to ensure that the component is within tolerance range. To date this has primarily been manual inspection of dimensions.

### SUMMARY

A method of assessing the quality of a manufactured component includes the steps of manufacturing a component and generating data at each of a plurality of locations on the component. The generated data is passed to a machine learning branch wherein the generated data is compared to training data at each of the plurality of locations and across a plurality of folds using K-fold validation to determine whether the component is of a functionally tolerant dimension at each of the plurality of sections.

A system for component assessment includes processing circuitry operable to assess the quality of a manufactured component by received generated data from each of a plurality of locations on a component and is also operable to provide generated data to a machine learning branch. The generated data is compared to training data at each of the plurality of locations and across a plurality of folds using K-fold validation to determine whether the component is a functionally tolerant dimension at each of the plurality of locations.

These and other features will be best understood from the following non-limiting drawings and specification, the following is a brief description.

### BRIEF DESCRIPTION OF THE DRAWINGS

Figure 1 schematically shows a gas turbine engine.
Figure 2 shows a testing regime for a manufactured component.
Figure 3 is another view of the Figure 2 testing regime.
Figure 4 shows a portion of the Figure 3 regime.
Figure 5 shows another portion of the Figures 2 and 3 regime.
Figure 6 shows a K-fold analysis.
Figure 7 is a flow chart of a machine learning system assessment regime.
Figure 8 shows detail of how the Figure 7 machine learning regime functions.

### DETAILED DESCRIPTION

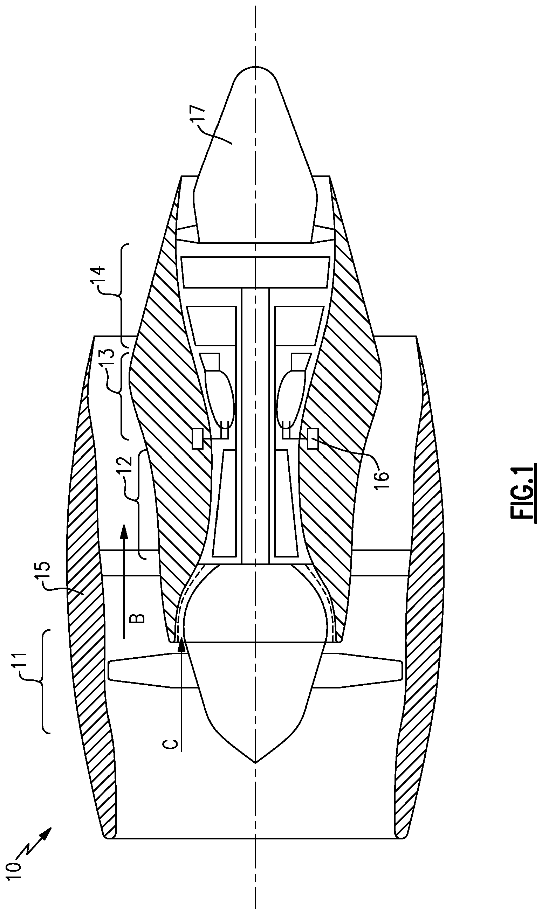

Figure 1 schematically illustrates a gas turbine engine 10. The example gas turbine engine 10 is a turbofan that generally incorporates a fan section 11, a compressor section 12, a combustor section 13 and a turbine section 14. The fan section 11 drives air along a bypass flow path B in a bypass duct defined within a nacelle 15. The turbine engine 10 also intakes air along a core flow path C into the compressor section 12 for compression and communication into the combustor section 13. In the combustor section 13, the compressed air is mixed with fuel from a fuel system 16 and ignited to generate an exhaust gas flow that expands through the turbine section 14 and is exhausted through exhaust nozzle 17. Although depicted as a turbofan turbine engine in the disclosed non-limiting embodiment, it should be understood that the concepts described herein are not limited to use with turbofans as the teachings may be applied to other types of turbine engines. As one example, rather than having the propulsor be an enclosed fan, the propulsor may be an open propeller. This embodiment can also be applied to industrial gas turbine engine as well.

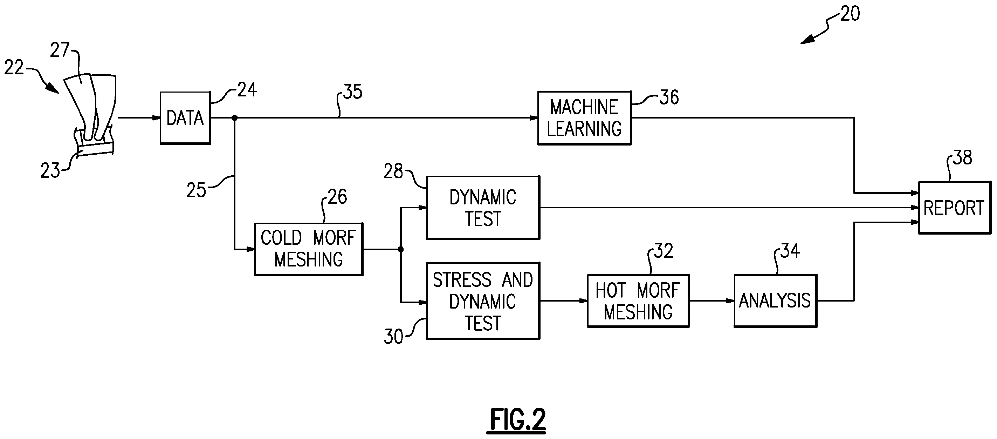

Figure 2 shows a testing system 20 for parts 22 that may be used in the engine 10. As known, components containing airfoils such as parts 22 must be assessed to determine whether they are acceptable for use. System 20 is a dual branch assessment regime that includes both physical testing 25 and the use of machine learning 35. Components as manufactured 22 include airfoils. In one embodiment, the component 22 may be an integrally bladed rotor wherein a disk 23 is formed integrally with blades 27 being the airfoil.

The part is evaluated by initially taking a number of sections through the airfoil. As example, twelve sections may be taken. In more detail, the part is measured/scanned along its surfaces and then broken down into sections. However, the broader teachings of this disclosure would extend to analyzing part surfaces, and is not limited to taking sections. Broadly, the method looks at a plurality of locations. This then generates data at process 24 which then passes into a first branch 25 for physical testing. An initial step is a cold mesh morphing at step 26 from nominal dimensions to inspected dimensions. The cold mesh is then subjected to dynamic testing at step 28 and stress and dynamic testing at step 30. After step 30 hot mesh morphing 32 is applied to inspect the mesh at operating conditions.

At step 34 there is then a geometric analysis performed which will either indicate the part should be rejected or accepted. Outputs of the decision from steps 28 and 34 are sent to step 38 to be part of a final report.

Steps 28 and 30 both inherit from step 26, i.e. a numerical mesh representing the as-manufactured geometry of the part 22. Step 28 consists of multiple solid mechanics simulations for different dynamical and vibratory load cases applied on the mesh of step 26. Similarly, step 30 uses the same mesh defined at step 26 to simulate multiple solid mechanics steady stress analyses on the part 22. These 2 steps, e.g. 28 and 30, are examples and different parts may not need both steps, whereas other parts could involve other type of analysis such as flow-field/aerodynamical or contact analysis to name a few.

In parallel to the branch 25, a machine learning branch 35 moves to an aero and dynamic leading edge/trailing edge model or machine learning step 36. As will be explained below, this model determines the acceptability of the part 22 and also reports to the step 38 to be part of a final report.

In an embodiment, a component must pass both the machine learning branch 35, and the testing branch 25 to be found acceptable.

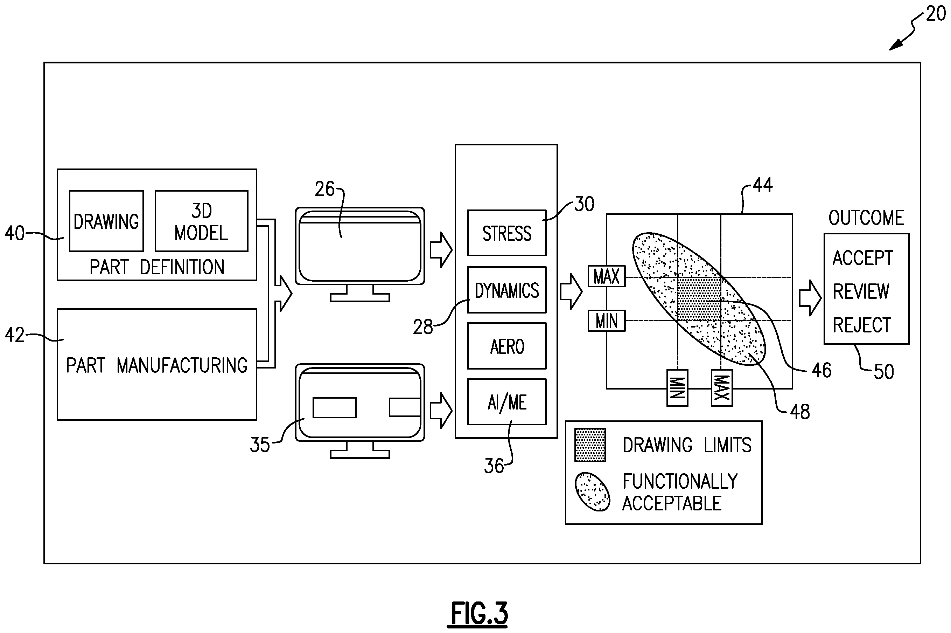

As shown in Figure 3, a part definition is defined by drawings and/or 3D models of the part. Inspection data from manufacturing is supplied at 42 to a rapid part assessment app 26. This data at 26 is then subjected to stress and dynamic evaluation at steps 30 and 28.

As shown graphically at 44, the nominal dimensions define a boundary 46. In the prior art the nominal dimensions have been relied upon to indicate the acceptability of a part. However, relying solely on geometric tolerances identifies a number of parts as being unacceptable, when in fact they may actually be functionally tolerant part. As shown graphically, the boundaries of the functionally tolerant part 48 extend far beyond the nominal drawing limits 46.

It should be understood that the graphical representation 44 is just that, and does not form any portion of the method disclosed here. That is, the graph is not prepared, but is instead simply utilized to convey the concept.

The Figure 2 and 3 processes may be performed on cloud based infrastructure. The result will be increased evaluation speed.

Details of the above aspect of this disclosure are disclosed and claimed in copending patent application serial number 18/594778, entitled "RAPID PART ASSESSMENT WITH TESTING AND MACHINE LEARNING BRANCHES," filed on even date herewith and owned by the assignee of this application.

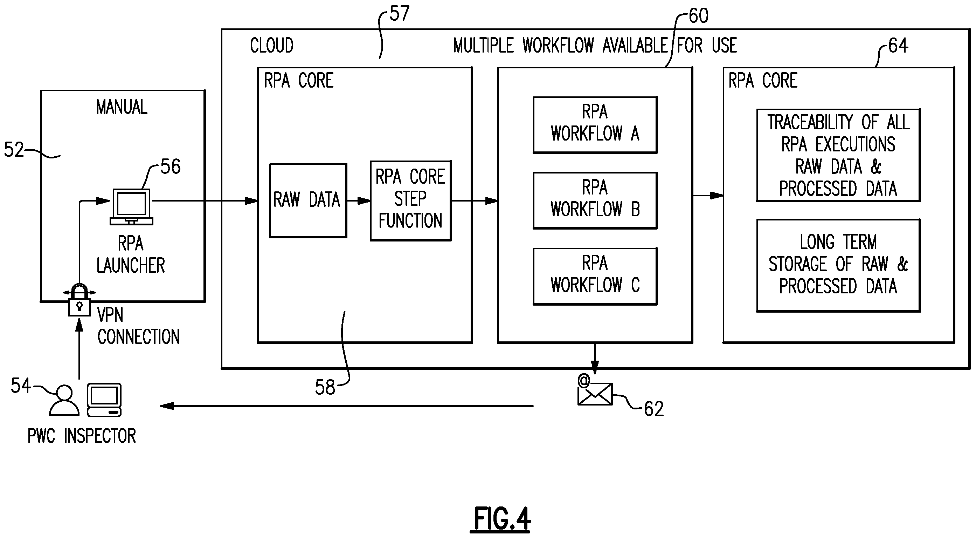

Figure 4 shows detail of testing branch 25. A network 52 receives a part assessment from an operator or inspector 54. That data is delivered to a cloud function 57. Network 52 may include computing devices that includes one or more computer processors, memory, storage means, network devices, input and/or output devices, and/or interfaces. The computing devices may be operable to execute one or more software programs. The computing devices may be operable to communicate with one or more networks established by one or more computing devices. The memory may include UVPROM, EEPROM, FLASH, RAM, ROM, DVD, CD, a hard drive, or other computer readable medium which may store data and/or the functionality of this description. The computing devices may be a desktop computer, laptop computer, smart phone, tablet, or any other computer device. Input devices may include a keyboard, mouse, touchscreen, etc. Output devices may include a monitor, speakers, printers, etc. Each of the computing devices may include one or more processors coupled to the memory. The computing devices may be coupled to each other by one or more connections 40. The connection 40 may be a wired and/or wireless connection. The connection 40 may be established over one or more networks and/or other computing systems.

The cloud function has a rapid part assessment core 58 which receives raw data. Although disclosed on the cloud, this disclosure could be ran elsewhere. At 60 a workflow is used for each type assessed part. The workflow would be directed to a particular component that is being evaluated. Thus, step 60 may well include workflows A, B, C for each of a plurality of distinct parts.

The stored workflows contain nominal geometry, functional and geometric limits, nominal mesh and loads to apply for functional analysis, as well as the general ordering and orchestration of information of the individual steps contained in the workflow. In fact, the stored workflow could be a core set of functionalities that are valid for any type of part to be analyzed by this system.

After this step the results of the workflow are stored at step 64 for long term storage, and also for status update and reporting. From step 60 an email report 62 may be sent back to the inspector 54.

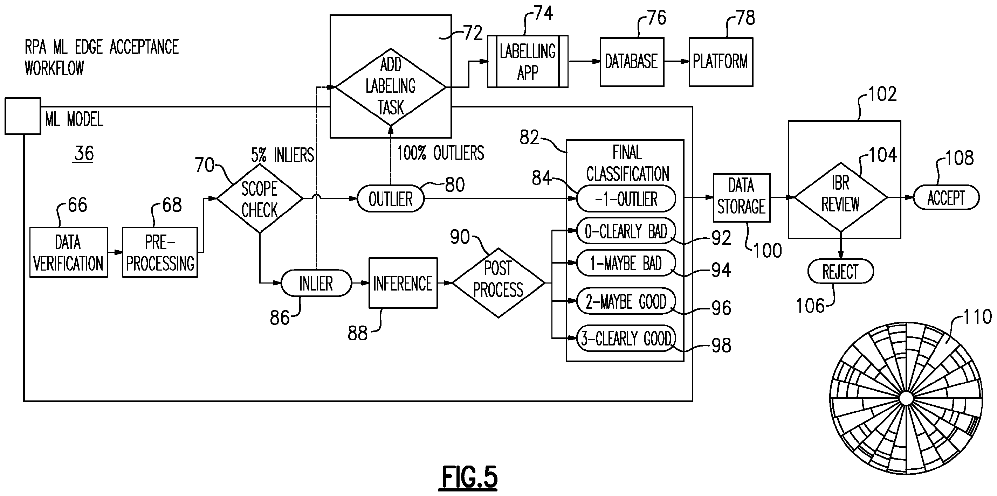

Moving to Figure 5, the machine learning branch 35 initially verifies the data in machine learning module 36 at step 66. The curvature and profile at each of a plurality of section cuts are then extracted at step 68. As an example, there may be on the order of three dozen section cuts in each airfoil. As mentioned above, the broader aspects of this disclosure extend beyond looking at sections.

There is a scope check 70, a labeling task 72, and a labeling app 74. This is then sent to data storage 76, and a platform 78. Task 72 is a task-generation function that assigns new tasks for human experts to evaluate and label a specific data item generated through this method. In this case, the data items being evaluated are airfoil shapes represented by profile and curvature plots. App 74 is a labeling application that allows expert humans to visualize the data-items and records the expert's label/evaluation. The app 74 stores the labels in a database 76. Platform 78 is another platform that may access data base 76 in order to process the new labels, monitor the performance of machine learning predictions against expert labels, and re-training the machine learning models.

As shown, the scope check 70 may identify a particular part as being an outlier at 80. If so, the result is communicated to task 72. At model 82, a final determination for the component is indicated as an outlier at 84.

Assuming the scope check does not identify the component as being an outlier, it then moves to the infer step 86 and an inference is made based on the profile and curvature of the several sections at 88. At step 90 there is post processing. After that the component is identified with a percentage of likelihood between zero (clearly bad) at 92; one (maybe bad) at step 94; two (maybe good) at step; and three (clearly good) at step 98. Of course, these number are examples and other quantities may be used. A percentage chance for each of these four likelihoods is then stored in data storage at 100.

There is then a component review at 102 that has a step 104 that identifies whether to accept 108 or reject 106 the component based upon the analysis.

The identification of a part of as "clearly bad" is made when a section clearly exhibits defects. The "maybe bad" is reached if a section may possibly exhibit defects that highly impact the part quality. The "maybe good" finding is made for a section that may possible exhibit defects, but the defects do not impact the part quality. The finding of "clearly good" is reached for a section that exhibits no flaws. Of course, methods and systems coming under this disclosure may use other terms than clearly bad, maybe bad, maybe good, and clearly good. However, when interpreting the claims for this application it should be understood that these are classifications that are relative to each other, and not absolute findings.

The "good" findings can be equated to the part being acceptable at the particular section or location, while "bad" can be equated to the part being rejected at the particular section or location.

At 110 there is a graphical showing of the results for a number of evaluated components based upon the determined dimension and assessment results.

Details of the above aspects of this disclosure are disclosed and claimed in copending patent application serial number 18/594796 entitled "RAPID PART ASSESSMENT UTILIZING MACHINE LEARNING," filed on even date herewith and owned by the assignee of this application.

A The K-fold splits separate a data set 114 into K equal folds. All folds must have comparable data distribution.

Each of the five folds 128, 130, 132, 134 and 136 for each of the splits are trained on data 112. The data in each of the folds is distinct. In each of the splits 118, 120, 122, 124, and 126, the training data folds are split differently between training and validation samples. Thus, each split represents a distinct training data sample on which a distinct machine learning model is trained and validated. Only the training data 114 is split between the folds.

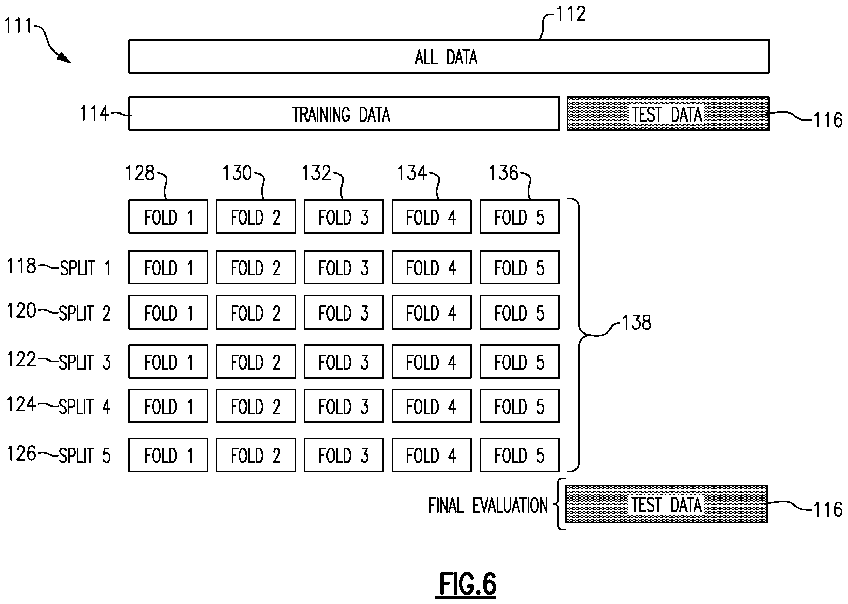

As shown in Figure 6, K models are trained on distinct datasets from each of the K splits, but all models are tested on a common test dataset.

An example test will be explained. At the start, you have 100% of data, that you split into two sets: training validation set of 80% and test set of 20%. You set the test set aside. The remaining 80% of data is then split into 5 folds, each containing 16% of the original data set. Data from the same blade is ensured to be only contained in a single fold of 16% (to avoid contamination). The machine learning model is then trained 5 times as follows. Choose 4 out of 5 sets, and call them train data, and use the remaining set as validation data. Train a model. Verify performance using test data set that was originally put aside (20%). Repeat the process 4 other times, by continuously taking 4 out of 5 folds at a time and using 1 remaining fold as validation. After 5 iterations, you ensured that each of the folds had a chance to be used as validation.

The training data within the folds for each of the splits are also distinct sets. Thus, the training data utilizes information from different inspected parts in each of the folds. Each part in each of the folds would be used in all of the splits for that fold. Any data from one part should not be split between the folds and must be grouped in one single fold.

Each of the plural folds may receive training data for each of the plurality of splits from a common part and the training data for the common part used with one of the plural folds is not used with others of the plural folds.

Each of the plural folds receive training data for each of the plurality of splits, but does not receive test data for each of the plurality of splits.

Details of the above aspect of this disclosure are disclosed and claimed in copending patent application serial number 18/594844, entitled "RAPID PART ASSESSMENT WITH K-FOLD EVALUATION USING HISTORIC DATA AND TEST DATA" filed on even date herewith and owned by the assignee of this application.

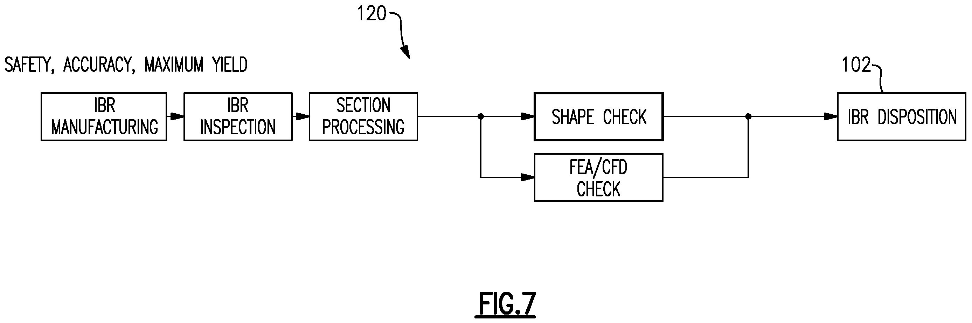

Figure 7 is a flow chart 120 of a system then evaluates the results of the machine learning prediction. A component is manufactured and inspected. There is section processing. Then, there is a shape check and an FEA/CFD check. The machine learning model then makes a disposition at step 102. The shape-check component 120 in Figure 7 represents the same machine learning component in Figure 2. In fact, figure 7 is a more generic version of the process shown in Figure 2.

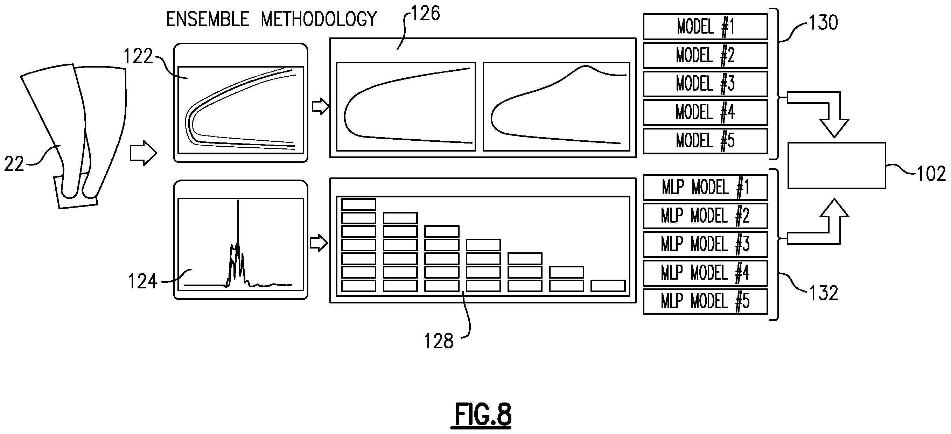

As shown in Figure 8, the machine learning will develop a profile image at 122 and curvature data at 124. A plurality of models 130 look to the profile image 122 at model 126 to reach a decision on outcomes 92/94/96/98. The machine learning system is composed of a plurality of Deep Neural Network architectures. Different architectures are trained on different data inputs 122 and 124. One architecture is an image recognition model trained to evaluate airfoil quality based on profile images 126. The second architecture is multi-layer perceptron trained on engineered features to evaluate the quality based on curvature data 128. Both model types are supervised machine learning classification models. A plurality of models are trained using each architecture at 130 and 132. During the evaluation of a new part, data types 122 and 124 are processed into images 126 and curvature features 128, then respectively evaluated using the plurality of models in 130 and 132 to reach a edge quality evaluation at 102.

Although neural networks are disclosed, other machine learning algorithms may be utilized.

The assessments are shown in 126 for two different parts, and with distinct clearly good and clearly bad results. There is also a machine learning process classifier on the curvature data at 128 using a plurality of machine learning process models at step 132.

This then reaches a conservative answer for the disposition 102. For each part and each section there would be an average between zero and three based upon the percentages assigned to each of outcome 92/94/96/98. Thus, there would tend to be a likelihood of a single result for each part between zero and three. This lets the percentage evaluation of step 126 be reached.

However, due to the conservative evaluation the method does not simply look to what is the highest probability. Rather, the method conservatively will reject the part if its "clearly bad" or "maybe bad" numbers exceed a pre-defined percentage limit.

Stated another way, for a part to be accepted its clearly good number does not need to just be higher than its "clearly bad" number, but in addition the clearly bad number cannot exceed a predetermined maximum. In one example, the clearly bad percentage maximum limit may be 20%, but of course this is simply an example. The point is that the clearly bad maximum does not need to be the highest likelihood percentage determined across the part for a part to be rejected.

The use of a probability identifier of whether the part is good or bad, and weighting the final determination in a conservative manner is disclosed and claimed in copending patent application serial number 18/594862, entitled "RAPID PART ASSESSMENT DEVELOPING GOOD/BAD PERCENTAGE LIKELIHOOD" filed on even date herewith and owned by the assignee of this application.

While an integrally bladed rotor is disclosed, other components having airfoils, such as separate blades or stators would come within the scope of this disclosure. In fact, other components such as castings would come within the scope of this disclosure.

In a featured embodiment, a method of assessing the quality of a manufactured component includes the steps of manufacturing a component and generating data at each of a plurality of locations on the component. The generated data is passed to a machine learning branch wherein the generated data is compared to training data at each of the plurality of locations and across a plurality of folds using K-fold validation to determine whether the component is of a functionally tolerant dimension at each of the plurality of sections.

In another embodiment according to the previous embodiment, the component includes an airfoil.

In another embodiment according to any of the previous embodiments, the generated data includes curvature and dimensional measurements.

In another embodiment according to any of the previous embodiments, the plurality of locations are a plurality of cross-sections.

In another embodiment according to any of the previous embodiments, the component is an integrally bladed rotor.

In another embodiment according to any of the previous embodiments, functionally tolerant components are identified which have dimensions outside of a nominal tolerance range.

In another embodiment according to any of the previous embodiments, the plural folds are provided with the training data from prior assessments.

In another embodiment according to any of the previous embodiments, each of the plural folds receive training data from a common part.

In another embodiment according to any of the previous embodiments, an evaluation is reached as to a percentage chance that the component is acceptable and a percentage chance that the component is rejectable at each of the location.

In another embodiment according to any of the previous embodiments, the evaluation uses a conservative evaluation such that if the percentage chance the component is rejectable at one of the locations exceeds a predetermined maximum that is less than 50%, the component is rejected.

In another featured embodiment, a system for component assessment includes processing circuitry operable to assess the quality of a manufactured component by received generated data from each of a plurality of locations on a component and is also operable to provide generated data to a machine learning branch. The generated data is compared to training data at each of the plurality of locations and across a plurality of folds using K-fold validation to determine whether the component is a functionally tolerant dimension at each of the plurality of locations.

In another embodiment according to any of the previous embodiments, the component includes an airfoil.

In another embodiment according to any of the previous embodiments, the generated data includes curvature and dimensional measurement.

In another embodiment according to any of the previous embodiments, the plurality of locations are a plurality of cross-sections.

In another embodiment according to any of the previous embodiments, the plurality of locations are a plurality of cross-sections.

In another embodiment according to any of the previous embodiments, the component is an integrally bladed rotor.

In another embodiment according to any of the previous embodiments, functionally tolerant components are identified which have dimensions outside of a nominal tolerance range.

In another embodiment according to any of the previous embodiments, the training data is from prior assessments.

In another embodiment according to any of the previous embodiments, an evaluation is reached as to a percentage chance that the component is acceptable and a percentage chance that the component is rejectable at each of the location.

In another embodiment according to any of the previous embodiments, the evaluation uses a conservative evaluation such that if the percentage chance the component is rejectable at one of the locations exceeds a predetermined maximum that is less than 50%, the component is rejected.

Although embodiments have been disclosed, a worker of skill in this art would recognize that modifications would come within the scope of the invention as defined by the claims. For that reason, the following claims should be studied to determine the true scope of protection.

## Claims

1. A method of assessing the quality of a manufactured component comprising the steps of:
manufacturing a component and generating data at each of a plurality of locations on the component; and
passing the generated data to a machine learning branch wherein the generated data is compared to training data at each of the plurality of locations and across a plurality of folds using K-fold validation to determine whether the component is of a functionally tolerant dimension at each of the plurality of sections.

2. The method as set forth in claim 1, wherein the component includes an airfoil.

3. The method as set forth in claim 1 or 2, wherein the generated data includes curvature and dimensional measurements.

4. The method as set forth in any preceding claim, wherein the plurality of locations are a plurality of cross-sections.

5. The method as set forth in any preceding claim, wherein the component is an integrally bladed rotor.

6. The method as set forth in any preceding claim, wherein functionally tolerant components are identified which have dimensions outside of a nominal tolerance range.

7. The method as set forth in any preceding claim, wherein the plural folds are provided with the training data from prior assessments; and, optionally,
wherein each of the plural folds receive training data from a common part.

8. The method as set forth in any preceding claim, wherein an evaluation is reached as to a percentage chance that the component is acceptable and a percentage chance that the component is rejectable at each of the location; and, optionally,
wherein the evaluation uses a conservative evaluation such that if the percentage chance the component is rejectable at one of the locations exceeds a predetermined maximum that is less than 50%, the component is rejected.

9. A system for component assessment comprising:
processing circuitry operable to assess the quality of a manufactured component by received generated data from each of a plurality of locations on a component; and
also operable to provide generated data to a machine learning branch wherein the generated data is compared to training data at each of the plurality of locations and across a plurality of folds using K-fold validation to determine whether the component is a functionally tolerant dimension at each of the plurality of locations.

10. The system as set forth in claim 9, wherein the component includes an airfoil.

11. The system as set forth in claim 9 or 10, wherein the generated data includes curvature and dimensional measurement.

12. The system as set forth in any of claims 9 to 11, wherein the plurality of locations are a plurality of cross-sections.

13. The system as set forth in any of claims 9 to 12, wherein the component is an integrally bladed rotor.

14. The system as set forth in any of claims 9 to 13, wherein functionally tolerant components are identified which have dimensions outside of a nominal tolerance range; and/or
wherein the training data is from prior assessments.

15. The system as set forth in any of claims 9 to 14, wherein an evaluation is reached as to a percentage chance that the component is acceptable and a percentage chance that the component is rejectable at each of the location; and, optionally,
wherein the evaluation uses a conservative evaluation such that if the percentage chance the component is rejectable at one of the locations exceeds a predetermined maximum that is less than 50%, the component is rejected.
